# EUROPÄISCHE PATENTANMELDUNG

(11) **EP 2 216 363 A1**
(43) Veröffentlichungstag der Anmeldung: **11.08.2010**
(21) Anmeldenummer: 10152209.2
(22) Anmeldetag: 01.02.2010
(51) Int. Cl.: C08K 5/21, C08K 5/053, C08L 61/28, C08L 61/24, C08K 5/3412, C08J 5/24, C08G 12/38, C08G 12/42

(54) **Wässrige, modifizierte Melaminharzmischung, Verfahren zu deren Herstellung und deren Verwendung zumTränken von saugfähigem Trägermaterial, sowie unter Verwendung der Melaminharzmischung hergestelltes Verbundmaterial**

(30) Priorität: 06.02.2009 EP 09152246
(71) Anmelder: BASF SE, 67056 Ludwigshafen (DE)
(72) Erfinder: Lunkwitz, Ralph, 67434, Neustadt (DE); Reif, Martin, 67354, Römerberg (DE); Pandl, Klaus, 76707, Hambrücken (DE); Negele, Anton, 67146, Deidesheim (DE)

(57) **Zusammenfassung**

Die vorliegende Erfindung betrifft eine wässrige, modifizierte Melaminharzmischung mit einem Gehalt an Harz im Bereich von 50 bis 70 Gew.-% bezogen auf die wässrige, modifizierte Melaminharzmischung, wobei im Harz 70 bis 99 % eines Melamin-Formaldehydharzes mit einem Melamin : Formaldehyd-Molverhältnis von 1 : 1,3 bis 1 : 2,0 und 1 bis 30 Gew.-% eines Harnstoff-Formaldehydharzes vorliegen und das Harz gegebenenfalls 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam, jeweils bezogen auf die wässrige Melaminharzmischung, enthält.

## Beschreibung

Die vorliegende Erfindung betrifft eine wässrige, modifizierte Melaminharzmischung mit einem Gehalt an Harz im Bereich von 50 bis 70 Gew.-% bezogen auf die wässrige, modifizierte Melaminharzmischung, wobei im Harz 70 bis 99 % eines Melamin-Formaldehydharzes mit einem Melamin : Formaldehyd-Molverhältnis von 1 : 1,3 bis 1 : 2,0 und 1 bis 30 Gew.-% eines Harnstoff-Formaldehydharzes vorliegen und das Harz gegebenenfalls 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam, jeweils bezogen auf die wässrige Melaminharzmischung, enthält.

Ferner betrifft die Erfindung ein Verfahren zur Herstellung einer wässrigen, modifizierten Melaminharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

Wässrige Melaminharzmischungen werden in der Technik auch als "Tränkharze" bezeichnet.

Derartige Tränkharze sind meistens reine Melamin-Formaldehydharze (MF-Harze). Nur in geringem Ausmaß werden auch Harnstoff-Formaldehydharze (UF-Harze) als Tränkharze eingesetzt, obwohl diese billiger sind.

Harnstoff-Formaldehydharze sind den Melamin-Formaldehydharzen aber als Tränkharze in der Regel unterlegen. So ergeben beispielsweise mit Harnstoff-Formaldehydharzen getränkte Tränkharzfilme oder-folien eine schlechtere Oberfläche der mit diesen Filmen oder Folien beschichteten Körper, insbesondere lässt die Hydrolysebeständigkeit, wie Wasserdampfbeständigkeit oder Quellverhalten oder Resistenz gegen mechanische Beanspruchung derartiger Oberflächen noch zu wünschen übrig.

Die im Stand der Technik vorgestellten Tränkharze sowie die daraus hergestellten Imprägnate (in der Technik auch Tränkharzfilme oder Overlayfilme genannt) lassen noch Raum für Verbesserungen.

Wichtige Verarbeitungsparameter des Tränkharzes, zum Beispiel die Penetration des Tränkharzes in das Papier, der homogene, gleichmäßige Verlauf des Harzes im oder auf dem Papier lassen noch zu wünschen übrig, insbesondere bei hohen Verarbeitungsgeschwindigkeiten zur Herstellung der Tränkharzfilme.

Auch besteht nach wie vor Bedarf Imprägnate aus Melaminharzmischungen und damit getränktem Material, zum Beispiel Overlayfilme, weniger spröde zu machen und somit die Rissbildung in dem Overlayfilm zu reduzieren sowie die Transparenz und Wasserdampfbeständigkeit des Overlayfilms zu verbessern.

Der Erfindung lag daher die Aufgabe zugrunde, eine wirtschaftlich attraktive Melaminharzmischung und deren Herstellweise aufzufinden, die sich zum Tränken von saugfähigem Material und zur Herstellung von Imprägnaten (zum Beispiel Overlayfilmen oder Tränkharzfilmen) mit geringer Sprödigkeit und geringer Rissbildung, guter Transparenz und Wasserdampfbeständigkeit eignet.

Es wurde daher die in den Ansprüchen definierte wässrige, modifizierte Melaminharzmischung gefunden sowie ein Verfahren zur Herstellung einer wässrigen Melaminharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

Die wässrige, modifizierte Melaminharzmischung hat einem Gehalt an Harz im Bereich von 50 bis 70 Gew.-% , vorzugsweise 50 bis 65 Gew.-%, jeweils bezogen auf die wässrige Melaminharzmischung.

Das Melamin-Formaldehydharz der wässrigen Melaminharzmischung hat ein Molverhältnis von Melamin : Formaldehyd von 1 : 1,3 bis 1 : 2,0, vorzugsweise von 1 : 1,5 bis 1 : 1,9.

Der Gehalt an Melamin-Formaldehydharz im Harz liegt im Bereich von 70 bis 99 Gew.-%, vorzugsweise 85 bis 99 Gew.-%, bezogen auf das Harz als Feststoff.

Der Gehalt an Harnstoff-Formaldehydharz im Harz liegt im Bereich von 1 bis 30 Gew.-%, vorzugsweise 1 bis 15 Gew.-%, bezogen auf das Harz als Feststoff.

Das Harnstoff-Formaldehydharz der wässrigen Melaminharzmischung hat üblicherweise ein Molverhältnis von Harnstoff : Formaldehyd von 1 : 2,5 bis 1 : 1,1.

Die wässrige Melaminharzmischung enthält gegebenenfalls eine Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam, bezogen auf die wässrige Melaminharzmischung.

Die genannten Melamin-Formaldehydharze und Harnstoff-Formaldehydharze können nach bekannten Verfahren (siehe zum Beispiel Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins") beispielsweise durch Umsetzen von Harnstoff und/oder Melamin mit Formaldehyd, in den gewünschten Molverhältnissen Carbamidgruppe : Aldehyd, vorzugsweise in Wasser als Suspendiermittel, hergestellt werden.

Die wässrige, modifizierte Melaminharzmischung enthält gegebenenfalls 1 bis 5 Gew.-%, vorzugsweise 1 bis 3 Gew.-% Komponente M1 ( Diethylenglycol), jeweils bezogen auf die wässrige Melaminharzmischung.

Die wässrige, modifizierte Melaminharzmischung enthält gegebenenfalls 1 bis 5 Gew.-%, vorzugsweise 1 bis 3 Gew.-% Polyethylenglykol mit einer mittleren Molmasse von 200 bis 1500, vorzugsweise einer mittleren Molmasse von 300 bis 1000, besonders bevorzugt, einer mittleren Molmasse von 400 bis 600 (Komponente M2), jeweils bezogen auf die wässrige Melaminharzmischung.

Die wässrige, modifizierte Melaminharzmischung enthält gegebenenfalls 1 bis 5 Gew.-%, vorzugsweise 1 bis 3 Gew.-% Komponente M3 (Glycerin), jeweils bezogen auf die wässrige Melaminharzmischung.

Ferner enthält die wässrige, modifizierte Melaminharzmischung gegebenenfalls 10 bis 8 Gew.-%, bevorzugt 1 bis 4 Gew.-% Caprolactam (Komponente M4), jeweils bezogen auf die wässrige Melaminharzmischung, enthalten.

Bevorzugt enthält die wässrige, modifizierte Melaminharzmischung eine Komponente M ausgewählt aus der Gruppe bestehend aus M1) Diethylenglykol, M2) Polyethylenglykol mit einer mittleren Molmasse von 200 bis 1500, M3) Glyzerin und M4) Caprolactam, besonders bevorzugt in den oben für die einzelnen Komponenten M1 bis M4 genannten Mengen.

Die Summe aller Komponenten Melamin- und Harnstoff-Formaldehydharz, Komponente M, gegebenenfalls weitere Zusatzstoffe und Wasser der wässrigen Melaminharzmischung beträgt 100 Gew.-%.

In der Regel weist die wässrige Melaminharzmischung eine Dichte bei 20 °C im Bereich von 1,1 bis 1,5 g/ml, bevorzugt 1,15 bis 1,45 g/ml.

Ferner weist die wässrige Melaminharzmischung in der Regel einen pH-Wert im Bereich von 8 bis 12, bevorzugt 8,5 bis 11 und besonders bevorzugt 9 bis 10,5 auf.

Der Trübungspunkt der wässrigen Melaminharzmischung liegt vorteilhaft im Bereich von 35 bis 65 °C, bevorzugt im Bereich von 40 bis 60 °C, insbesondere im Bereich von 45 bis 60 °C.

Zur Messung des Trübungspunktes geht man wie folgt vor.

1 g (ein Gramm) der wässrigen Melaminharzmischung wird bei Reaktionstemperatur dem Reaktor entnommen und mit 5 g (fünf Gramm) entionisiertem Wasser praktisch derselben Temperatur wie sie die entnommene Probe hat, verdünnt und anschließend durch externe Kühlung mit einer Geschwindigkeit von ca. 10 °C pro Minute abgekühlt. Der Trübungspunkt ist die Temperatur, bei der "vom oberen Temperaturwert kommend" eine Trübung auftritt, die mit bloßem Auge bei Durchsicht durch ein Probegefäß mit einer Schichtdicke von 1 cm sichtbar ist.

In der Regel weist die wässrige Melaminharzmischung eine Viskosität bei 20 °C von 20 bis 3000 mPa·s auf, bevorzugt 50 bis 150 mPa·s.

Die Wasserverträglichkeit der wässrigen Melaminharzmischung liegt in der Regel bei mindestens 1 : 1,5 (Harz : Wasser).

Die Wasserverträglichkeit wird wie folgt ermittelt. Zu einem Gramm (1 g) wässriger Melaminharzmischung gibt man bei 20 °C durch vorsichtiges Zudosieren, zum Beispiel durch Zutitrieren oder Zupipettieren, Wasser. Die Menge Wasser bei der eine bleibende Trübung in der wässrigen Melaminharzmischung auftritt wird in das Verhältnis zur eingesetzten Menge der wässrigen Melaminharzmischung gesetzt.

Die wässrige, modifizierte Melaminharzmischung kann wie folgt hergestellt werden.

Melamin-Formaldehydharz und Harnstoff-Formaldehydharz werden in den Mengen zur Erzielung des gewünschten Gewichtverhältnis Melamin-Formaldehydharz : Harnstoff-Formaldehydharz, vorzugsweise bei Raumtemperatur, gemischt.

Hierzu können das Melamin-Formaldehydharz und Harnstoff-Formaldehydharz als beispielsweise sprühgetrocknete Feststoffe vorliegen, die dann durch Zugabe eines Suspendiermittels, vorzugsweise Wasser, zur Harz-Mischung in eine Suspension oder Lösung übergeführt werden.

Bevorzugt liegt mindestens eines der Harze, Melamin-Formaldehydharz oder Harnstoff-Formaldehydharz, bereits in einem Suspendiermittel, vorzugsweise Wasser, suspendiert oder gelöst vor.

Besonders bevorzugt werden wässrige Suspensionen oder Lösungen des Melamin-Formaldehydharzes und Harnstoff-Formaldehydharzes in den Mengen zur Erzielung des gewünschten Gewichtverhältnis Melamin-Formaldehydharz : Harnstoff-Formaldehydharz, vorzugsweise bei Raumtemperatur, gemischt.

Gut geeignete derartige wässrige Suspensionen oder Lösungen sind die Kauramin® Typen (MF-Harz) und Kaurit®-Typen (UF-Harz) der BASF SE.

In einem weiteren Verfahren werden Melamin, Formaldehyd, Harnstoff und gegebenenfalls eine Komponente M, wie oben definiert, in Wasser umgesetzt.

In einer gut geeigneten Ausführungsform werden Melamin und Formaldehyd in einem Molverhältnis von 1 : 1,3 bis 1 : 2,0, , vorzugsweise von 1 : 1,5 bis 1 : 1,9 in einem wässrigen Medium mit 1 bis 10 Gew.-%, vorzugsweise 3 bis 8 Gew.-%, jeweils bezogen auf die wässrige Melaminharzmischung, einer Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam bei einem pH-Wert von 8 bis 10 und bei einer Temperatur von 60 bis 110 °C umgesetzt. Der Zusatz des Harnstoffs geschieht wie unten beschrieben.

Die Komponenten M1) bis M4) können alle zusammen zu Anfang der Umsetzung präsent sein oder es kann nur ein Teil dieser Komponenten M1) bis M4) zu Anfang der Reaktion präsent sein, und der Rest der Komponenten M1) bis M4) kann zu jedem Zeitpunkt während der Reaktion, also während die Temperatur des Reaktionsgemisches im Bereich von 60 bis 110 °C liegt, in einer Menge von 1 bis 10 Gew.-%, vorzugsweise 3 bis 8 Gew.-%, jeweils bezogen auf die wässrige Melaminharzmischung, auf einmal oder portionsweise zudosiert werden.

Ungeachtet der Verfahrensvariante wird die Kondensationsreaktion in der Regel so lange durchgeführt, bis die wässrige Melaminharzmischung einen Trübungspunkt im Bereich von 35 bis 65 °C, bevorzugt im Bereich von 40 bis 60 °C, insbesondere im Bereich von 45 bis 60 °C aufweist.

Bei einer weiteren Variante des Verfahrens zur Herstellung der wässrigen Melaminharzmischung (im folgenden auch "Stufenvariante" genannt) wird (i) Melamin und Formaldehyd in einem Molverhältnis von 1 : 1,3 bis 1 : 2,0, in einem wässrigen Medium mit 1 bis 10 Gew.-%, bezogen auf die wässrige Melaminharzmischung, mit einem Teil der Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam bei einem pH-Wert von 8 bis 10 und bei einer Temperatur von 60 bis 110 °C umgesetzt, (ii) die Reaktionsmischung auf eine Temperatur im Bereich von 10 bis 50 °C abgekühlt und der unter (i) nicht-zugesetzte Teil der Komponente M zu der abgekühlten Reaktionsmischung zugegeben.

Die Formulierung "einem Teil der Komponente M" kann eine eher qualitative Bedeutung haben, nämlich, dass aus der Gruppe M1) bis M4) eines oder mehrere der Mitglieder dieser Gruppe in Schritt (i) vollständig nicht eingesetzt wird oder werden und erst in Schritt (ii) eingesetzt wird oder werden, wobei in Schritt (i) mindestens eines der Mitglieder der Gruppe M1) bis M4) eingesetzt wird.

Die Formulierung "einem Teil der Komponente M" kann aber auch eine eher quantitative Bedeutung haben, nämlich, dass aus der Gruppe M1) bis M4) eines oder mehrere der Mitglieder dieser Gruppe in Schritt (i) mengenmäßig (quantitativ) nur zu einem Teil eingesetzt wird oder werden und erst in Schritt (ii) die Restmenge oder Restmengen eingesetzt wird oder werden.

Die gewünschte Menge Harnstoff kann zu jedem Zeitpunkt nach dem Umsetzen des Melamins mit Formaldehyd zugegeben werden. Bevorzugt wird die gewünschte Menge Harnstoff am Ende der Umsetzung der oben genannten Komponenten, besonders bevorzugt wenn die Reaktionstemperatur einen Wert im Bereich von 70 bis 100 °C erreicht hat, zugegeben und in der Regel die Mischung noch 0,5 bis 1 h nachreagieren gelassen, bevor die Mischung im allgemeinen auf 40 bis 60 °C abgekühlt wird.

Vorteilhaft liegt der pH-Wert der wässrigen Kondensationsphase im Verfahren zur Herstellung der wässrigen modifizierten Melaminharzmischung, im Bereich von 7,0 bis 10.

Der Temperaturbereich im Verfahren zur Herstellung der erfindungsgemäßen modifizierten Melaminharzmischung liegt bevorzugt bei 70 bis 110 °C und besonders bevorzugt bei 80 bis 100 °C.

Melamin wird üblicherweise in fester Form eingesetzt. Harnstoff wird üblicherweise fest oder in wässriger Lösung eingesetzt. Formaldehyd kommt üblicherweise in Form konzentrierter wässriger Lösungen, beispielsweise als 30 bis 60-gewichtsprozentige wässrige Lösung, bevorzugt als 45 bis 55-gewichtsprozentige Lösung, zum Einsatz.

Die Erfindung betrifft ferner die Verwendung der wässrigen, modifizierten Melaminharzmischung zum Tränken von saugfähigem Material, vorzugsweise saugfähigem flächigen Material, besonders bevorzugt saugfähigem dünnem flächigen Material, beispielsweise von Papier, wie Papierbahnen, Papierbögen, Vliesstoffen oder anderen, dem Fachmann geläufigen Geweben und Gewirken. Weiterhin kann die wässrige, modifizierte Melaminharzmischung zur Herstellung von Overlays, imprägnierter Cellulose, insbesondere α-Cellulose, für Laminatfußböden, die beispielsweise mit einer Oberflächenkomponente wie Pigmenten oder oberflächenresistentem Korund versetzt sind, verwendet werden.

Die Erfindung betrifft ferner ein Imprägnat, das dadurch erhältlich ist, dass man ein saugfähiges Material mit einer, wie oben definierten, wässrigen, modifizierten Melaminharzmischung behandelt und anschließend trocknet.

Vorzugsweise ist das saugfähige Material flächig, besonders bevorzugt ist es ein dünnes, saugfähiges flächiges Material, beispielsweise Papier, wie Papierbahnen, Papierbögen, Vliesstoffe oder andere, dem Fachmann bekannte Gewebe und Gewirke.

Die Behandlung des saugfähigen Materials, zum Beispiel durch Auftragung der wässrigen, modifizierten Melaminharzmischung, geschieht auf dem, dem Fachmann bekannten Wege, zum Beispiel per Walzen oder Rakeln.

Die Trocknung des mit der wässrigen, modifizierten Melaminharzlösung imprägnierten saugfähigen Materials findet bei dem Fachmann bekannten Bedingungen, beispielsweise bei einer Temperatur im Bereich von 100 bis 150 °C, statt. In der Regel enthalten die so erhältlichen Imprägnate Melaminharz im Bereich von 80 bis 120 g/m², bezogen auf das trockene Melaminharz ("Flächenauftragsgewicht"). Die Restfeuchte so erhältlicher Imprägnate liegt in der Regel im Bereich von 6 bis 8 Gew.-%, bezogen auf das getrocknete Imprägnat.

Weiterhin betrifft die Erfindung ein Verfahren zur Herstellung eines Verbundmaterials, wobei man ein, wie oben beschriebenes, Imprägnat unter Wärme und Druck auf ein Trägermaterial (auch "Substrat" genannt) aufbringt. In einem gut geeigneten Verfahren bringt man das, wie oben beschrieben erhältliche, Imprägnat unter erhöhtem Druck, beispielsweise 1 bis 100 bar, bevorzugt 10 bis 50 bar und besonders bevorzugt 15 bis 25 bar und bei einer Temperatur im Bereich von 60 bis 300 °C mit dem, vorzugsweise bereits mit einem Dekorpapier versehenen, Substrat miteinander in Kontakt.

Als Substrat eigenen sich alle dem Fachmann bekannten, vorzugsweise flächigen, festen Gegenstände aus diversem Material, zum Beispiel Platten. Bevorzugte feste Substrate sind flächig und enthalten Lignocellulose, beispielsweise Holz. Ganz besonders gut geeignete Substrate sind Platten aus mit Aminoplastharz gebundenen Holzspänen oder Holzfasern, zum Beispiel mitteldichte Faserplatten (Medium Density Fiber Boards, MDF) oder hochdichte Faserplatten (High Density Fiber Boards, HDF).

Weiterhin betrifft die Erfindung ein Verbundmaterial, erhältlich wie oben beschrieben. Ein bevorzugtes Verbundmaterial enthält die Schichten (i) Substrat, vorzugsweise aus mit Aminoplastharz gebundenen Holzspänen oder Holzfasern, zum Beispiel mitteldichte Faserplatten (Medium Density Fiber Boards, MDF) oder hochdichte Faserplatten (High Density Fiber Boards, HDF), (ii) ein auf mindestens einer Seite, bevorzugt einer Seite, des Substrats aufgebrachte Dekorpapierschicht und (iii) eine auf dem aus (ii) erhältlichen Körper mindestens einseitig, vorzugsweise auf der Dekorpapierschicht aufgebrachte Schicht aus dem oben beschriebenen Imprägnat (auch Overlayfilm genannt).

Üblicherweise bildet das Substrat (i) im Verbundmaterial den dicksten Bestandteil und üblicherweise sind die Schichten (ii) und (iii) dünne, papierblattstarke Schichten. Beispiele

### 1. Herstellung der wässrigen, modifizierten Melaminharzmischung

### 1.a Herstellung der wässrigen Melaminharzmischung Nr. 1a

Die Einsatzstoffe, wie in folgender Tabelle 1 a aufgeführt, wurden vorgelegt, zum Sieden erhitzt (ca. 100 °C) und bei dieser Temperatur belassen. In kurzen Zeitabständen wurde eine Probe entnommen und der Trübungspunkt, wie oben beschrieben, bestimmt um den Fortschritt der Kondensation festzustellen.

Bei einem Trübungspunkt von 41 °C wurde das Reaktionsgemisch durch externe Kühlung mit einem kalten Wasserbad abgekühlt. Sobald die Temperatur des Reaktionsgemisches 90 °C erreicht hatte wurden 110 g einer 68 Gew.-%igen wässrigen Harnstofflösung zugegeben und 30 Minuten bei dieser Temperatur belassen. Danach wurde die Mischung mit einer externen Wasserkühlung auf 50 °C abgekühlt und 63 g Polyethylenglykol der Molmasse 200 bis 1500 der Reaktionsmischung hinzugefügt und die Mischung auf Raumtemperatur abkühlen lassen.

Die so erhaltene Mischung wurde wie unten beschrieben weiterverwendet.

Tabelle 1a: Vorgelegte Einsatzstoffe

| | |
|---|---|
| Wässriger Formaldehydlösung, 49 Gew.-%ig | 765 g |
| Wasser VE | 474 g |
| Diethylenglykol | 112 g |
| 25 %ige Natronlauge | 1,0g |
| Melamin (fest) | 910 g |
| Caprolactam (80%ige wässrige Lösung) | 66 g |

### 1.b Herstellung der wässrigen Melaminharzmischung Nr. 1 b Zum Vergleich

Die Einsatzstoffe, wie in obiger Tabelle 1a dargestellt, wurden vorgelegt und, wie für 1a oben beschrieben, umgesetzt, allerdings wurde die vierfache Menge Harnstoff (440 g einer 68 Gew.-%igen wässrigen Harnstofflösung) zugegeben.

Die so erhaltene Melaminharzmischung Nr. 1 b wurde wie unten beschrieben weiterverwendet.

### 2. Herstellung der Harzflotte und der Imprägnate

Mit den entsprechenden wässrigen Melaminharzmischungen 1a und 1b wurden wie folgt Imprägnate (Overlayfilme) per "Laborhandimprägnierung" hergestellt:

Zur wässrigen Melaminharzmischung 1 a oder 1 b wurden jeweils 0,34 Gew.-% Härter H 529 der BASF SE, 5 Gew.-% Wasser und 0,05 Gew.-% Kauropal® 933 (nichtionisches Tensid der BASF SE) als Netzmittel, jeweils bezogen auf die resultierende Mischung, auch "Harzflotte" genannt, dazugegeben.

Die jeweilige Flotte 1 a oder 1 b war durch eine Trübzeit von 290 (bei Melaminharzmischung 1a) und 280 (bei Melaminharzmischung 1 b) Sekunden charakterisiert.

Die Trübzeit wurde wie folgt gemessen: Eine Probe der jeweiligen Harzflotte im Reagenzglas wurde in ein 100 °C heißes Wasserbad getaucht und gemessen wie lange es dauert, bis der Reagenzglasinhalt trübe wurde.

Die jeweilige Harzflotte 1 a oder 1 b wurde in eine Blechwanne gefüllt (Handimprägnierbad). Das jeweils zu imprägnierende Overlaypapier (25 g /m²) wurde in das Handimprägnierbad gelegt und nahm die Harzflotte auf.

Danach wurde die Harzaufnahme des jeweiligen Papiers, wie üblich per Drahtrakeln, eingestellt.

Das jeweilige nasse Overlaypapier wurde dann in einen Umlufttrockenschrank gebracht und bei 120 °C 2 Minuten lang getrocknet.

Per Wägung wurde festgestellt, wieviel Harz aufgetragen wurde. In der Regel kann der oben beschriebene Prozess einmal oder auch mehrmals wiederholt werden, um das gewünschte Flächenauftragsgewicht von etwa 100g/m² zu erreichen.

Die Restfeuchte des jeweiligen Overlayfilms lag im Bereich von 6 bis 8 Gew.-%, bezogen auf den getrockneten Film.

### 3. Herstellung der mit den jeweiligen Imprägnaten (Overlayfilmen) versehenen Prüfkörper

Auf eine HDF-Platte (ca. 8 mm Dicke, 40 cm x 40 cm) wurde oberseitig handelsüblicher Dekorfilm und darauf der oben beschriebene jeweilige Overlayfilm aufgelegt (Sandwichherstellung). Auf der Rückseite der HDF-Platte wurde ein handelsüblicher "Gegenzugsfilm" aufgelegt um den Verzug des Prüfkörpers zu vermeiden.

Dieses Sandwich wurde in einer Laborpresse bei einer Pressplattentemperatur von 180 °C verpresst. Der Pressdruck von 25 bar wurde 40 Sekunden lang aufrecht erhalten. Die Presse wurde geöffnet, der Prüfkörper herausgenommen und geprüft.

Die Prüfung erfolgte in der Regel an einem Prüfkörper, welcher einen Tag lang bei Raumtemperatur (Klimatisierung) gelagert wurde.

Die Zusammensetzung der wässrigen Melaminharzmischung und die Prüfergebnisse der jeweiligen Prüfkörper sind in Tabelle 2 dargestellt.

### 4. Prüfmethoden

### 4.1 Härtung / Hydrolysebeständigkeit der Oberfläche:

Geprüft wurde mit der Methode des Säuretests. Hierzu wurde eine leicht violette, salzsaure Rhodamin-B-Lösung (0,2 molare Salzsäure + 0,004 Gew.-% Rhodamin B) auf die mit dem Imprägnat versehene Oberfläche des Prüfkörpers über 16 h unter weitgehendem Luftabschluss (Abdeckung mit hohler Glashalbkugel) bei Raumtemperatur einwirken gelassen. Wenn die Oberfläche durch die Salzsäure angegriffen wird, dann dringt das Rhodamin-B zur Papierfaser der Imprägnate vor und färbt die Papierfasern Rot.. Fortschreitende Rotfärbungen zeigen das Ausmaß der Schädigung der Oberfläche an. Die Bewertung geschah mit dem Schulnotensystem, wobei die Note 1 oder 2 in der Verarbeitungstechnik akzeptiert wird und höhere Noten auf unzureichende Hydrolysebeständigkeit hinweisen.

### 4.2 Optische Beurteilung: Transparenz:

Mit den jeweiligen, wie oben beschrieben hergestellten Prüfkörpern wurde die Transparenz mit dem Auge nach dem deutschen Schulnotensystem beurteilt, das heißt 1 = sehr gute Transparenz, ansteigende Zahlen: immer schlechtere Transparenz.

In der Verarbeitungstechnik werden möglichst hohe Transparenz, konkrete Transparenzwerte von 1 bis 2, gefordert.

### 4.3 WD-Test (Widerstandsfähigkeit gegenüber Wasserdampf)

Ein wie oben beschrieben hergestellter Prüfkörper wurde mit der zu testenden Seite nach unten auf die Öffnung eines mit kochendem Wasser gefüllten Erlenmeyerkolbens gelegt und 1 h lang dem Wasserdampf ausgesetzt. Geprüft wurde das optische Aussehen der mit Wasserdampf (100 °C) beaufschlagten Oberfläche.

Gewünscht ist ein möglichst geringer Angriff der Oberfläche, ergo möglichst geringe Veränderung der Oberfläche gegenüber dem Ausgangszustand.

Die Beurteilung geschah mit dem Auge und nach dem deutschen Schulnotensystem, das heißt 1 = kein mit dem Auge sichtbarer Angriff, also sehr gute Wasserdampfwiderstandsfähigkeit, ansteigende Zahlen: immer schlechtere Wasserdampfwiderstandsfähigkeit.

**Tabelle 2: Eigenschaften der mit den Harzflotten aus den wässrigen Melaminharzmischungen 1a und 1 b hergestellten Prüfkörper**

| | wässrige Melaminharz-mischung 1a | wässrige Melaminharz-mischung 1 b (Vergleich) |
|---|---|---|
| Härtung (4.1) | 1 | 3 |
| Optische Beurteilung (4.2) | 1 | 3 |
| Wasserdampf (4.3) | 2 | 6 |

Man erkennt, dass nur ein relativ kleiner Bereich der Substitutionsmenge des MF- gegen das UF-Harz gute Resultate erbringt. Zuviel UF-Harz verschlechtert die Eigenschaften der Prüfkörper, zum Beispiel Oberfläche und Wasserdampfbeständigkeit.

## Patentansprüche

1. Wässrige, modifizierte Melaminharzmischung mit einem Gehalt an Harz im Bereich von 50 bis 70 Gew.-% bezogen auf die wässrige, modifizierte Melaminharzmischung, wobei im Harz 70 bis 99 % eines Melamin-Formaldehydharzes mit einem Melamin : Formaldehyd-Molverhältnis von 1 : 1,3 bis 1 : 2,0 und 1 bis 30 Gew.-% eines Harnstoff-Formaldehydharzes vorliegen und das Harz gegebenenfalls 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und M4) Caprolactam, jeweils bezogen auf die wässrige Melaminharzmischung, enthält.

2. Wässrige Melaminharzmischung nach Anspruch 1, wobei die Komponente M ausgewählt wird aus der Gruppe bestehend aus M1) 1 bis 5 Gew.-% Diethylenglykol, M2) 1 bis 5 Gew.-% Polyethylenglykol mit einer mittleren Molmasse von 200 bis 1500, M3) 1 bis 5 Gew.-% Glyzerin und M4) 1 bis 8 Gew.-% Caprolactam, jeweils bezogen auf die wässrige Melaminharzmischung.

3. Wässrige Melaminharzmischung nach den Ansprüchen 1 bis 2, wobei das Harz 85 bis 99 % des Melamin-Formaldehydharzes und 1 bis 15 Gew.-% des Harnstoff-Formaldehydharzes enthält.

4. Wässrige Melaminharzmischung nach den Ansprüchen 1 bis 3 die eine Komponente M enthält.

5. Wässrige Melaminharzmischung nach den Ansprüchen 1 bis 4, die einen Trübungspunkt von 35 bis 65 °C aufweist.

6. Verfahren zur Herstellung einer wässrigen, modifizierten Melaminharzmischung, wie in Anspruch 1 definiert, wobei man einerseits Melamin-Formaldehydharz und andererseits Harnstoff-Formaldehydharz in den Mengen zur Erzielung des gewünschten Gewichtverhältnis Melamin-Formaldehydharz : Harnstoff-Formaldehydharz und gegebenenfalls die Komponente M), wie in Anspruch 1 definiert, mischt.

7. Verfahren zur Herstellung einer wässrigen, modifizierten Melaminharzmischung, wie in Anspruch 1 definiert, wobei man Melamin, Formaldehyd, Harnstoff und gegebenenfalls eine Komponente M, wie in Anspruch 1 definiert, in Wasser umsetzt.

8. Verwendung der in den Ansprüchen 1 bis 5 definierten Melaminharzmischung zum Tränken von saugfähigem Material.

9. Imprägnat, **dadurch** erhältlich, dass man ein saugfähiges Material mit einer wie in den Ansprüchen 1 bis 5 definierten wässrigen Melaminharzmischung behandelt und anschließend trocknet.

10. Verfahren zur Herstellung eines Verbundmaterials, wobei man ein Imprägnat, wie in Anspruch 9 definiert, unter Wärme und Druck auf ein Trägermaterial aufbringt.

11. Verbundmaterial, erhältlich nach einem Verfahren, wie in Anspruch 10 definiert.
